# EUROPEAN PATENT APPLICATION

(11) **EP 4 608 001 A1**
(43) Date of publication of application: **27.08.2025**
(21) Application number: 23914030.4
(22) Date of filing: 05.01.2023
(51) Int. Cl.: H04W 28/02

(54) **COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN); GUO, Yali, Dongguan, Guangdong 523860 (CN)
(74) Representative: RGTH
(86) International application number: PCT/CN2023/070688
(87) International publication number: WO 2024/145872

(57) **Abstract**

Provided are a communication method and a communication device. The method comprises: a first network entity determines a first notification mode of congestion information of a first traffic flow; and the first network entity sends first information to a second network entity, the first information being used for triggering the second network entity to report the congestion information of the first service flow according to the first notification mode. The method in embodiments of the present application helps to determine a congestion control mechanism and a congestion information reporting mode.

## Description

### TECHNICAL FIELD

This application relates to the field of communications technologies, and more specifically, to a communication method and a communications apparatus.

### BACKGROUND

In some communications systems, an application server may adjust a service data transmission rate, a congestion window, and the like based on congestion information of a quality of service (quality of service, QoS) flow, so as to improve system communication efficiency. However, currently it is not clear how to perform congestion detection and report congestion information.

### SUMMARY

Embodiments of this application provide a communication method and a communications apparatus. The following describes various aspects involved in embodiments of this application.

According to a first aspect, a communication method is provided, including: deciding, by a first network entity, on a first notification manner of congestion information of a first service flow; and transmitting, by the first network entity, first information to a second network entity, where the first information is used for triggering the second network entity to report, in the first notification manner, the congestion information of the first service flow.

According to a second aspect, a communication method is provided, including: receiving, by a second network entity, first information from a first network entity or a fifth network entity, where the first information is used for triggering the second network entity to report congestion information of a first service flow in a first notification manner; and in response to the first information, reporting, by the second network entity, the congestion information of the first service flow in the first notification manner.

According to a third aspect, a communication method is provided, including: receiving, by a third network entity, enabling information of a first operation transmitted by a first network entity, where the first operation includes adding congestion information of a first service flow to a header of a data packet corresponding to the first service flow; and reporting, by the third network entity, the congestion information of the first service flow based on the enabling information.

According to a fourth aspect, a communication method is provided, including: transmitting, by a fourth network entity, second information to a first network entity, where the second information is used for triggering the first network entity to decide on a first notification manner of congestion information of a first service flow.

According to a fifth aspect, a communication method is provided, including: transmitting, by a fifth network entity, first information to a second network entity, where the first information is used for triggering the second network entity to report, in a first notification manner, congestion information of a first service flow.

According to a sixth aspect, a communications apparatus is provided, including: a determining unit, configured to decide on a first notification manner of congestion information of a first service flow; and a transmitting unit, configured to transmit first information to a second network entity, where the first information is used for triggering the second network entity to report the congestion information of the first service flow in the first notification manner.

According to a seventh aspect, a communications apparatus is provided, including: a receiving unit, configured to receive first information from a first network entity or a fifth network entity, where the first information is used for triggering the apparatus to report congestion information of a first service flow in a first notification manner; and a notification unit, configured to: in response to the first information, report the congestion information of the first service flow in the first notification manner.

According to an eighth aspect, a communications apparatus is provided, including: a receiving unit, configured to receive enabling information of a first operation transmitted by a first network entity, where the first operation includes adding congestion information of a first service flow to a header of a data packet corresponding to the first service flow; and a notification unit, configured to report the congestion information of the first service flow based on the enabling information.

According to a ninth aspect, a communications apparatus is provided, including: a transmitting unit, configured to transmit second information to a first network entity, where the second information is used for triggering the first network entity to decide on a first notification manner of congestion information of a first service flow.

According to a tenth aspect, a communications apparatus is provided, including: a transmitting unit, configured to transmit first information to a second network entity, where the first information is used for triggering the second network entity to report congestion information of the first service flow in the first notification manner.

According to an eleventh aspect, a communications apparatus is provided, including a memory, a transceiver, and a processor, where the memory is configured to store a program, the processor performs data transmission and reception by using the transceiver, and the processor is configured to invoke the program in the memory to cause the communications apparatus to execute the method according to any one of the first aspect to the fifth aspect.

According to a twelfth aspect, a chip is provided, including a processor, configured to invoke a program from a memory, so that a device installed with the chip executes the method according to any one of the first aspect to the fifth aspect.

According to a thirteenth aspect, a computer-readable storage medium is provided, and the computer-readable storage medium stores a program that causes a computer to execute the method according to any one of the first aspect to the fifth aspect.

According to a fourteenth aspect, a computer program product is provided, including a program, where the program causes a computer to execute the method according to any one of the first aspect to the fifth aspect.

According to a fifteenth aspect, a computer program is provided, where the computer program causes a computer to execute the method according to any one of the first aspect to the fifth aspect.

In embodiments of this application, a first network entity transmits first information to a second network entity, which may trigger a second network entity to report congestion information of a first service flow in a first notification manner, thereby facilitating determining of a congestion control mechanism and a congestion information reporting manner.

### BRIEF DESCRIPTION OF THE DRAWINGS

FIG. 1 is an example diagram of a wireless communications system to which embodiments of this application are applied.
FIG. 2 is an example diagram of a 5GS architecture according to an embodiment of this application.
FIG. 3 is a schematic flowchart of a communication method according to an embodiment of this application.
FIG. 4 is a schematic flowchart of a communication method according to another embodiment of this application.
FIG. 5 is a schematic flowchart of a communication method according to still another embodiment of this application.
FIG. 6 is a schematic flowchart of a communication method according to still another embodiment of this application.
FIG. 7 is a schematic flowchart of a communication method according to still another embodiment of this application.
FIG. 8 is a schematic flowchart of a communication method according to still another embodiment of this application.
FIG. 9 is a schematic structural diagram of a communications apparatus according to an embodiment of this application.
FIG. 10 is a schematic structural diagram of a communications apparatus according to another embodiment of this application.
FIG. 11 is a schematic structural diagram of a communications apparatus according to still another embodiment of this application.
FIG. 12 is a schematic structural diagram of a communications apparatus according to still another embodiment of this application.
FIG. 13 is a schematic structural diagram of a communications apparatus according to still another embodiment of this application.
FIG. 14 is a schematic structural diagram of an apparatus according to an embodiment of this application.

### DETAILED DESCRIPTION OF THE EMBODIMENTS

Technical solutions in this application are described below with reference to the accompanying drawings.

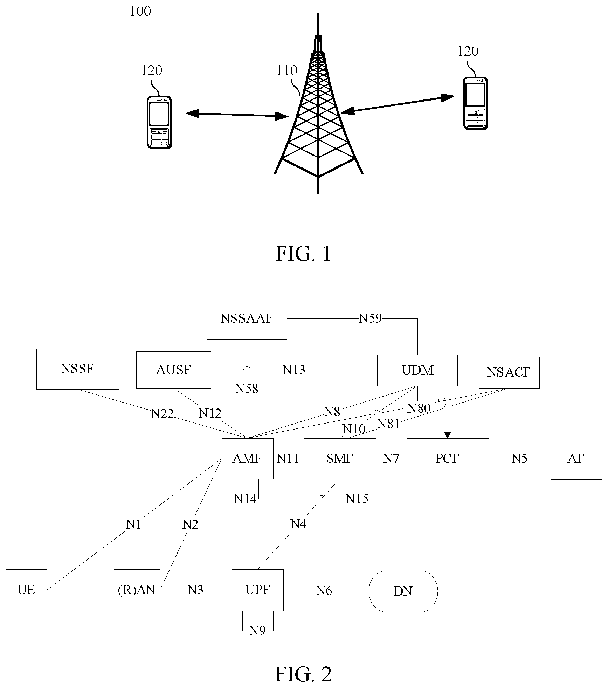

FIG. 1 shows a wireless communications system 100 to which embodiments of this application are applied. The wireless communications system 100 may include a network device 110 and a user equipment (user equipment, UE) 120. The network device 110 may communicate with the UE 120. The network device 110 may provide communication coverage for a specific geographic area, and may communicate with the UE 120 within the coverage. The UE 120 may access a network (for example, a wireless network) by using the network device 110.

FIG. 1 exemplarily shows one network device and two UEs. Optionally, the wireless communications system 100 may include a plurality of network devices, and another quantity of terminal devices may be included within a coverage range of each network device, which is not limited in embodiments of this application. Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may further be applied to a future communications system, such as a 6th generation mobile communications system or a satellite communications system.

The UE in embodiments of this application may also be referred to as a terminal device, an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The UE in embodiments of this application may be a device providing a user with voice and/or data connectivity and capable of connecting people, objects, and machines, such as a handheld device or vehicle-mounted device having a wireless connection function. The UE in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the UE. The network device may also be referred to as an access network device or a radio access network device. For example, the network device may be a base station. The network device in embodiments of this application may be a radio access network (radio access network, RAN) node (or device) that connects the UE to a wireless network. The base station may broadly cover devices having the following various names, or may be interchanged with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access piont, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof.

In some embodiments, the network device may be fixed or mobile. For example, a helicopter or an unmanned aerial vehicle may be configured to function as a mobile network device, and one or more cells may move depending on a location of the mobile network device. In other examples, a helicopter or an unmanned aerial vehicle may be configured to function as a device that communicates with another network device. In some embodiments, the network device may be a CU or a DU, or the network device may include a CU and a DU, or the network device may further include an AAU.

It should be understood that the network device may be deployed on land, including being indoors or outdoors, handheld, or vehicle-mounted, may be deployed on a water surface, or may be deployed on a plane, a balloon, or a satellite in the air. In embodiments of this application, the network device and a scenario in which the network device is located in embodiments of this application are not limited.

It should also be understood that all or some of functions of the network device and the UE in this application may also be implemented by software functions running on hardware, or by virtualization functions instantiated on a platform (for example, a cloud platform).

The following describes a system architecture in an embodiment of this application with reference to FIG. 2.

FIG. 2 is a diagram of an architecture of a 5G system (5G system, 5GS), which includes network elements such as a network slice specific authentication and authorization function (network slice specific authentication and authorization function, NSSAAF), a network slice selection function (network slice selection function, NSSF), an authentication server function (authentication server function, AUSF), unified data management (unified data management, UDM), a network slice admission control function (network slice admission control function, NSACF), an access and mobility management function (access and mobility management function, AMF), a session management function (session management function, SMF), a policy control function (policy control function, PCF), an application function (application function, AF), a UE, a radio access network (radio access network, RAN), a user plane function, (user plane function, UPF), and a data network (data network, DN).

Embodiments of this application relate to a radio access network (RAN), a control plane network element (for example, a PCF or an SMF), a user plane network element (for example, a UPF), or an application server (application server, AS). A DN may implement a function of a user plane part of the application server, and an AF may implement a function of a control plane part of the application server. Optionally, the access network element may be the network device 110 in FIG. 1, and the terminal device may be the terminal device 120 in FIG. 1.

For example, in FIG. 2, a 5GS may notify an application server (for example, an AF) of congestion information, to facilitate adjustment of a service data transmission rate and a congestion window by the application server. A method of notifying the application server of the congestion information notification may include the following two types:

### I. Congestion information notification based on user plane

In one manner, the RAN detects a congestion status, adds congestion information to an application layer header by using an explicit congestion notification (explicit congestion notification, ECN) mechanism (such as ECN marking), and transmits the congestion information to the AS via user plane.

In another manner, the RAN detects a congestion status, transmits congestion information to a protocol data unit (protocol data unit, PDU) session anchor (PDU session anchor, PSA) UPF by using a user plane part of general packet radio service (general packet radio service, GPRS) tunnel protocol (user plane part of GPRS tunnel protocol, GTP-U), then the PSA UPF applies an ECN mechanism (such as ECN marking), to add the congestion information to an application layer header, and transmit the congestion information to the AS via user plane.

### II. Congestion information notification based on control plane

In one manner, the RAN detects a congestion status, and transmits the congestion information to the AF via a control plane network element such as an SMF, a PCF, and an NEF.

In another manner, the RAN detects a congestion status, transmits the congestion information to a PSA UPF by using a GTP-U, and then the UPF transmits the congestion information to the AF by using a control plane network element such as an SMF, a PCF, and an NEF.

In addition, the SMF may transmit displayed indication information to the RAN or the UPF to enable a congestion detection mechanism for a specific QoS flow, or may enable a congestion detection mechanism at a QoS flow level by using a dedicated 5G QoS identifier (5G QoS identifier, 5QI).

In the foregoing embodiments, there are two congestion control mechanisms, namely, the RAN performing ECN marking and the UPF performing ECN marking, and there are two notification manners, namely, congestion information notification based on user plane and congestion information notification based on control plane. However, it is not clear how the 5GS specifically determines a congestion control mechanism and a manner to notify the application server of the congestion information.

In addition, an RAN handover occurs when a terminal device moves, and how to perform a congestion detection mechanism in this movement scenario is also a technical problem to be resolved. For example, it is unclear, when an RAN handover occurs, how to trigger a handover target RAN to perform congestion detection, whether a source RAN is still required to cancel congestion detection, and how the target RAN determines a manner of notifying the application server of the congestion information.

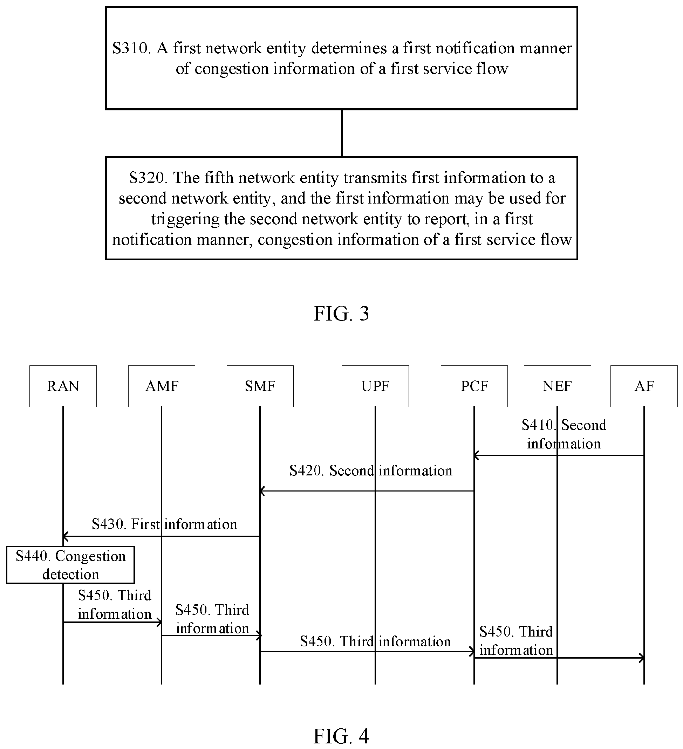

To solve one or more of the foregoing technical problems, this application provides a communication method and a communications apparatus. With reference to FIG. 3 to FIG. 8, the following describes embodiments of this application in detail by using examples.

FIG. 3 is a schematic flowchart of a communication method according to an embodiment of this application. The method 300 shown in FIG. 3 may include steps S310 and S320, which are specifically as follows.

S310. A first network entity decides on a first notification manner of congestion information of a first service flow.

The first network entity may be a control plane network element, for example, a session management function (SMF).

The first service flow may be a service data (service data) flow or a quality of service (QoS) flow.

Optionally, the first notification manner may include a manner of reporting congestion information (for example, a reporting path of congestion information). For example, the first notification manner may include the manner of congestion information notification based on user plane and/or the manner of congestion information notification based on control plane mentioned in the foregoing embodiment.

The first network entity may determine the first notification manner based on second information.

Optionally, the second information may be used for triggering the first network entity to determine the first notification manner. For example, the second information may include at least one of the following information: congestion control indication information, third congestion information reporting path information, or flow description information of the first service flow. The congestion control indication information may be used to instruct to enable congestion control for the first service flow, and the third congestion information reporting path information may be used to indicate that a reporting path of the congestion information of the first service flow includes control plane and/or user plane.

Optionally, the flow description information may include at least one of the following information: data packet filtering information corresponding to a service flow, an identity of a target UE corresponding to a service flow, an address of a target UE, an application identifier corresponding to a service flow, or a QoS identifier corresponding to a service flow.

In embodiments of this application, the first network entity may determine the first notification manner in the following two manners:

### Manner 1:

A fourth network entity may indicate a congestion information reporting manner by using indication information (for example, the second information). The fourth network entity may be an AF. For example, the fourth network entity may transmit the second information to the first network entity. Further, the first network entity may determine the first notification manner based on the second information.

### Manner 2:

The second information may be preconfigured in a core network network element (for example, an SMF, a PCF, or a UDM). When congestion control is enabled for the first service flow, the first network entity may determine, based on the second information, to report congestion information by using the control plane or the user plane.

S320. The first network entity transmits first information to a second network entity.

The second network entity may be an access network device, such as a radio access network (RAN) or a next-generation radio access network (NG-RAN).

Optionally, the first information may be used for triggering the second network entity to report the congestion information of the first service flow in the first notification manner.

In response to the first information, the second network entity may report the congestion information of the first service flow in the first notification manner.

In some embodiments, the first notification manner may include: reporting, by the second network entity, the congestion information via control plane after performing congestion detection. Optionally, the first information may include at least one of the following information: congestion control indication information, first congestion information reporting path information, or flow description information of the first service flow. The congestion control indication information may be used to instruct to enable congestion control for the first service flow, and the first congestion information reporting path information may be used to indicate that a reporting path of the congestion information of the first service flow is control plane.

Optionally, after the first information is received, the second network entity may perform congestion detection on the first service flow. Further, the second network entity may transmit third information to a fourth network entity, where the third information may include the congestion information of first service flow.

In embodiments of this application, the first network entity transmits the first information to the second network entity, which may trigger the second network entity to report the congestion information of the first service flow in the first notification manner, thereby facilitating determining of a congestion control mechanism and a congestion information reporting manner.

The following provides an example with reference to FIG. 4. When an application server expects to acquire congestion information via control plane, a 5GS may be configured by using an AF to perform congestion detection by an RAN and perform congestion information reporting based on the control plane. A specific procedure is as follows:

S410. The AF transmits second information to the PCF by using a network exposure function (network exposure function, NEF). The second information may include at least one of the following information:
congestion control indication information (which may be used to instruct the 5GS to enable congestion control for a target flow), third congestion information reporting path information (which may be used to instruct a target network entity to report congestion information via control plane), or flow description information (which may be description information used for determining a target QoS flow, such as a UE ID, a UE address, packet filtering information, an AF ID, a QoS flow ID, or the like).

S420. The PCF forwards the second information to an SMF.

S430. The SMF transmits first information to the RAN.

The SMF may determine, based on pre-configuration information provided by a network operator and the second information provided by the AF for the target QoS , that the RAN reports the congestion information via control plane after performing congestion detection, and transmits the first information to the RAN. Optionally, the SMF may first transmit the first information to the AMF, and then the AMF transparently transmits (or forwards) the first information to the RAN.

Optionally, the first information may include the congestion control indication information, first congestion information reporting path information, and flow description information of a target QoS flow. The first congestion information reporting path information may be used to indicate that a reporting path of congestion information of the target QoS flow is control plane.

S440. The RAN performs congestion detection on the target QoS flow.

S450. The RAN transmits third information to the AF. The third information may include congestion information of the target QoS flow.

The RAN may report the congestion information of the target QoS flow to the AF through the AMF, the SMF, the PCF, and the NEF using control plane signaling. The congestion information may include information such as flow description information, a congestion direction (uplink and downlink), and a congestion degree.

In some embodiments, the first notification manner may include: reporting, by the second network entity, the congestion information via user plane after performing congestion detection. Optionally, the first information may include at least one of the following information: enabling information of a first operation or flow description information of the first service flow.

Optionally, the second network entity may perform congestion detection on the first service flow to obtain congestion information of the first service flow. Further, the second network entity may add the congestion information of the first service flow to a header of a second packet in the first service flow. When network congestion occurs in the first service flow, the second network entity may transmit the first service flow including the second data packet.

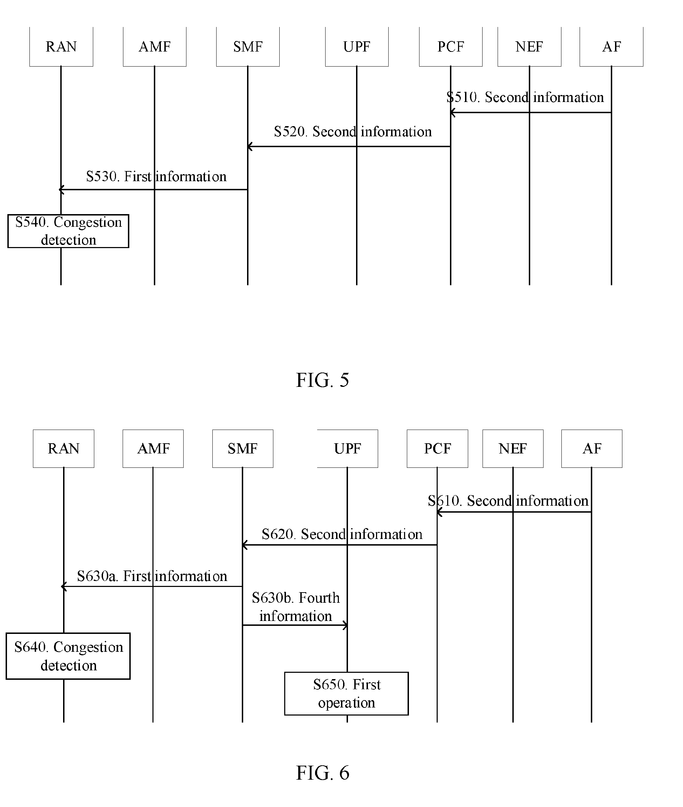

The following provides an example with reference to FIG. 5. When an application server expects to acquire congestion information via user plane and an RAN supports ECN marking, a 5GS may be configured by using an AF to perform congestion detection by the RAN and perform congestion information reporting based on a UP plane. A specific procedure is as follows:

S510. The AF transmits second information to a PCF by using an NEF. The second information may include at least one of the following information:
congestion control indication information (which may be used to instruct the 5GS to enable congestion control for a target flow), third congestion information reporting path configuration (which may be used to instruct a target network entity to report congestion information via user plane), or flow description information (which may be description information used for determining a target QoS flow, such as a UE ID, a UE address, packet filtering information, an AF ID, a QoS flow ID, or the like).

S520. The PCF forwards the second information to an SMF.

S530. The SMF transmits first information to the RAN.

The SMF may determine, based on pre-configuration information provided by a network operator and the second information provided by the AF for the target QoS flow, that the RAN reports the congestion information via user plane after performing congestion detection, and transmits the first information to the RAN. Optionally, the SMF may first transmit the first information to the AMF, and then the AMF transparently transmits (or forwards) the first information to the RAN.

Optionally, the first information may include at least one of the following information: enabling information of a first operation or flow description information of the target QoS flow. Optionally, the first operation includes adding congestion information of the target QoS flow to a header of a data packet corresponding to the target QoS flow. For example, the first operation may be ECN marking.

S540. The RAN performs congestion detection on the target QoS flow.

The RAN may perform congestion detection on the target QoS flow, and perform the first operation on a second data packet in the target QoS flow when network congestion occurs. Further, the RAN may transmit the second data packet (obtained after the first operation is performed).

In some embodiments, the first notification manner may include: transmitting, by the second network entity, congestion information to a third network entity, and reporting the congestion information, by the third network entity via user plane after performing the first operation. Optionally, the third network entity is a user plane network element, for example, a UPF. Optionally, the first operation may include adding the congestion information of the first service flow to a header of a data packet corresponding to the first service flow. For example, the first operation may be ECN marking.

Optionally, the first information may include at least one of the following information: congestion control indication information, second congestion information reporting path information, or flow description information of the first service flow. The congestion control indication information may be used to instruct to enable congestion control for the first service flow, and the second congestion information reporting path information may be used to indicate that a reporting path of the congestion information of the first service flow is a user plane.

Optionally, after the first information is received, the second network entity may perform congestion detection on the first service flow to obtain congestion information of the first service flow. Further, the second network entity may add the congestion information of the first service flow to a header of a first packet in the first service flow. The second network entity may transmit the first service flow including the first data packet.

Optionally, the first network entity may transmit enabling information of the first operation to the third network entity. The third network entity may report the congestion information of the first service flow based on the enabling information.

Optionally, the third network entity may receive congestion information, transmitted by the second network entity, of the first service flow. Further, the third network entity may transmit a third data packet, and a header of the third data packet may include the congestion information of the first service flow. For example, the third network entity may read a first data packet (corresponding to the first service flow) transmitted by the second network entity (the header of the first data packet may include the congestion information of the first service flow). The third network entity may perform the first operation on the third data packet based on the congestion information of the first service flow.

The following provides an example with reference to FIG. 6. When an application server expects to acquire congestion information via user plane and a UPF supports ECN marking (an RAN does not support the ECN marking), a 5GS may be configured by using an AF to perform congestion detection by the RAN and perform congestion information reporting based on a UP plane. A specific procedure is as follows:

S610. An AF transmits second information to a PCF by using an NEF. The second information may include at least one of the following information:
congestion control indication information (which may be used to instruct the 5GS to enable congestion control for a target flow), third congestion information reporting path configuration (which may be used to instruct a target network entity to report congestion information via user plane), or flow description information (which may be description information used for determining a target QoS flow, such as a UE ID, a UE address, packet filtering information, an AF ID, a QoS flow ID, or the like).

S620. The PCF forwards the second information to an SMF.

S630a. The SMF transmits first information to the RAN.

The SMF may determine, based on pre-configuration information provided by a network operator and the second information provided by the AF for the target QoS flow, that the RAN reports the congestion information via user plane after performing congestion detection, and transmits the first information to the RAN. Optionally, the SMF may first transmit the first information to an AMF, and then the AMF transparently transmits (or forwards) the first information to the RAN.

Optionally, the first information may include at least one of the following information: congestion control indication information, second congestion information reporting path information, or flow description information of the target QoS flow. Optionally, the second congestion information reporting path information is used to indicate reporting congestion information of the target QoS flow via user plane.

S630b. The SMF transmits fourth information to the UPF.

Optionally, the fourth information may include at least one of the following information: enabling information of a first operation or flow description information of the target QoS flow. Optionally, the first operation includes adding congestion information of the target QoS flow to a header of a data packet corresponding to the target QoS flow. For example, the first operation may be ECN marking.

S640. The RAN performs congestion detection on the target QoS flow.

The RAN may perform congestion detection on the target QoS flow to obtain the congestion information of the target QoS flow. The RAN may add the congestion information of the target QoS flow to a GTP-U header of a first data packet corresponding to the target QoS flow. Further, the RAN may transmit the first data packet.

S650. The UPF performs a first operation.

The UPF reads the GTP-U header from the target QoS flow, and performs a first operation on a third data packet in the target QoS flow based on the congestion information carried in the GTP-U header. Further, the UPF may transmit the third data packet (obtained after the first operation is performed).

When an RAN handover occurs in a movement scenario of a terminal device, a source RAN may forward a received congestion detection indication and a congestion notification path indication to a target access network device by using a handover procedure, which may be implemented by two methods depending on RAN handover modes.

Method 1: For an Xn-based handover, a source access network device may transmit congestion detection indication and/or congestion notification path configuration information to a target access network device by using an Xn interface.

Optionally, a handover of the terminal device between the source access network device and the target access network device may be based on an Xn interface, and a second network entity may receive first information from a fifth network entity. Optionally, the second network entity may be the target access network device, and the fifth network entity may be the source access network device.

It should be understood that the fifth network entity may be equivalent to the second network entity in foregoing embodiments, and may receive the first information and the like that are transmitted by the first network entity. When the terminal device performs an Xn interface - based handover between the source access network device and the target access network device, the fifth network entity may transmit congestion detection indication and/or congestion notification path configuration information (for example, the first information) to the target access network device.

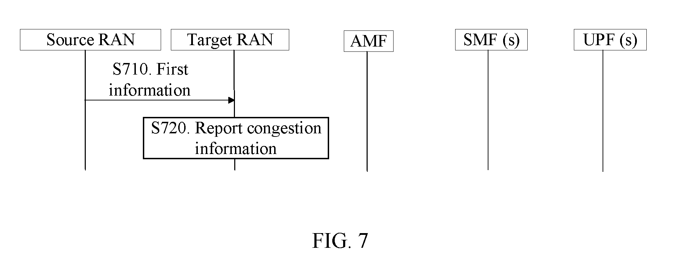

The following provides an example with reference to FIG. 7. When a UE moves and an Xn-based RAN handover occurs, a source RAN may transmit congestion detection indication information and/or the congestion notification path configuration information to a target RAN through an Xn interface. A specific procedure is as follows:

S710. The source RAN transmits first information to the target RAN.

The first information may include at least one of the following information:
congestion control indication information (which may be used to instruct a 5GS to enable congestion control for a target flow), enabling information of a first operation, congestion information reporting path configuration (which may be used to instruct a target network entity to report congestion information via control plane and/or user plane), or flow description information of a target QoS flow.

The first information may be carried in a handover request (handover request) message in an Xn interface based RAN handover (handover) procedure.

For example, the flow description information of the target QoS flow may include a QoS flow identifier (QoS flow ID, QFI), packet filter set information (packet filter set), and the like.

S720. The target RAN reports congestion information.

The target RAN may determine the target QoS flow and a congestion information reporting manner based on the received first information. There may be three cases depending on different content included in the congestion information.

Case 1 (corresponding to embodiments in FIG. 4): When congestion configuration information received by the target RAN device includes the congestion control indication information, and the congestion information reporting path is control plane, the target RAN may perform congestion detection on the target QoS flow, and report the congestion information to an AF through an AMF, an SMF, a PCF, and an NEF.

Case 2 (corresponding to embodiments in FIG. 5): When congestion configuration information received by the target RAN includes the enabling information of the first operation, the target RAN may perform congestion detection on the target QoS flow, and when congestion occurs on a network, perform the first operation (for example, ECN marking) on a data packet in the target QoS flow.

Case 3 (corresponding to embodiments in FIG. 6): When congestion configuration information received by the target RAN includes the congestion control indication information and a congestion information reporting path is user plane, the target RAN may perform congestion detection on the target QoS flow, and add congestion information of the target QoS flow to a GTP-U header of a data packet in the target QoS flow.

Method 2: For an N2-based handover, a source access network device transmits congestion detection indication and/or congestion notification path configuration information to a target access network device by using a source AMF and a target AMF.

Optionally, a handover of the terminal device between the source access network device and the target access network device may be based on an N2interface, and a second network entity may receive first information from a fifth network entity. Optionally, the second network entity may be a target access network device, and the fifth network entity may be a target AMF.

It should be understood that the fifth network entity may be equivalent to the second network entity in foregoing embodiments, and may receive the first information and the like that are transmitted by the first network entity. When the terminal device performs an N2 interface based handover between the source access network device and the target access network device, the fifth network entity may transmit congestion detection indication and/or congestion notification path configuration information (for example, the first information) to the target access network device through the source AMF and the source AMF.

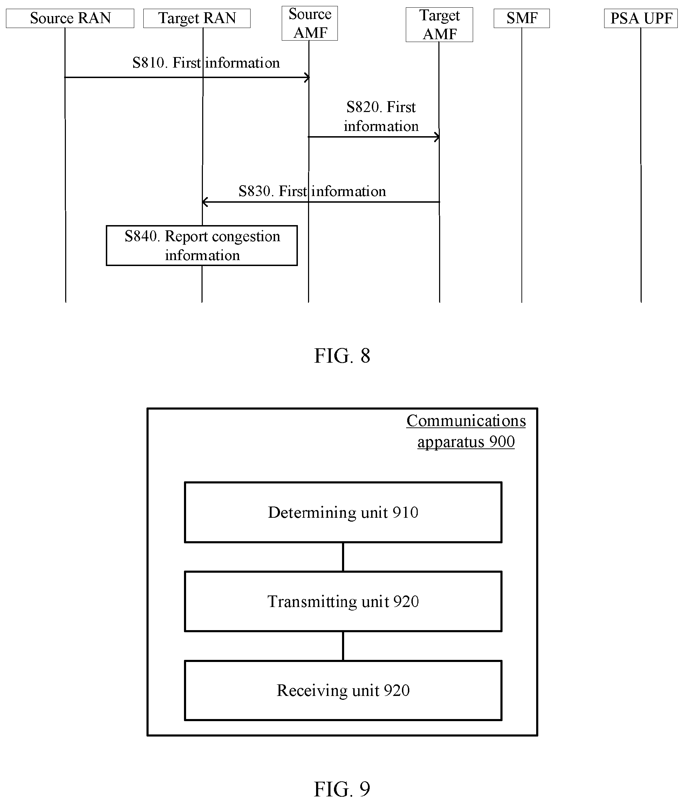

The following provides an example with reference to FIG. 8. When there is no Xn interface between a source RAN and a target RAN or an Xn-based RAN handover fails, the source RAN may initiate an N2-based RAN handover. The source RAN may transmit congestion detection indication information and/or congestion notification path configuration information to the target RAN via a source AMF and a target AMF. A specific procedure is as follows:

S810. The source RAN transmits first information to a source AMF.

The first information may include at least one of the following information:
congestion control indication information (which may be used to instruct a 5GS to enable congestion control for a target flow), enabling information of a first operation, congestion information reporting path configuration (which may be used to instruct a target network entity to report congestion information via control plane and/or user plane), or flow description information of a target QoS flow.

The first information may be carried in a handover request (handover required) message in an N2 interface based RAN handover procedure.

S820. The source AMF transmits the first information to the target AMF.

The first information may be carried in a message Namf_Communication_CreateUEContext Request in the N2 interface based RAN handover procedure.

S830. The target AMF transmits the first information to the target RAN.

The first information may be carried in a handover request (handover request) message in the N2 interface based RAN handover procedure.

S840. The target RAN reports congestion information.

The target RAN may determine the target QoS flow and a congestion information reporting manner based on the received first information. There may be three cases depending on different content included in the congestion information.

Case 1 (corresponding to embodiments in FIG. 4): When congestion configuration information received by the target RAN device includes the congestion control indication information, and the congestion information reporting path is control plane, the target RAN may perform congestion detection on the target QoS flow, and report the congestion information to an AF through an AMF, an SMF, a PCF, and an NEF.

Case 2 (corresponding to embodiments in FIG. 5): When congestion configuration information received by the target RAN includes the enabling information of the first operation, the target RAN may perform congestion detection on the target QoS flow, and when network congestion occurs, perform the first operation (for example, ECN marking) on a data packet in the target QoS flow.

Case 3 (corresponding to embodiments in FIG. 6): When congestion configuration information received by the target RAN includes the congestion control indication information and a congestion information reporting path is user plane, the target RAN may perform congestion detection on the target QoS flow, and add congestion information of the target QoS flow to a GTP-U header of a data packet in the target QoS flow.

The method embodiments of this application are described above in detail with reference to FIG. 1 to FIG. 8. Apparatus embodiments of this application are described below in detail with reference to FIG. 9 to FIG. 14. It should be understood that the descriptions of the method embodiments correspond to descriptions of the apparatus embodiments, and therefore, for parts that are not described in detail, reference may be made to the foregoing method embodiments.

FIG. 9 is a schematic structural diagram of a communications apparatus according to an embodiment of this application. As shown in FIG. 9, the apparatus 900 includes a determining unit 910 and a transmitting unit 920, which are specifically as follows.

The determining unit 910 is configured to decide on a first notification manner of congestion information of a first service flow.

The transmitting unit 920 is configured to transmit first information to a second network entity, where the first information is used for triggering the second network entity to report the congestion information of the first service flow in the first notification manner.

Optionally, the first notification manner includes: reporting, by the second network entity, the congestion information via control plane after performing congestion detection.

Optionally, the first information includes at least one of the following information: congestion control indication information, first congestion information reporting path information, or flow description information of the first service flow, where the congestion control indication information is used to instruct to enable congestion control for the first service flow, and the first congestion information reporting path information is used to indicate that a reporting path of the congestion information of the first service flow is control plane.

Optionally, the first notification manner includes: transmitting, by the second network entity, the congestion information to a third network entity, and reporting, by the third network entity, the congestion information via user plane after performing a first operation, where the first operation includes adding the congestion information of the first service flow to a header of a data packet corresponding to the first service flow.

Optionally, the transmitting unit 920 is further configured to transmit enabling information of the first operation to the third network entity.

Optionally, the third network entity is a user plane function UPF.

Optionally, the first information includes at least one of the following information: congestion control indication information, second congestion information reporting path information, or flow description information of the first service flow, where the congestion control indication information is used to instruct to enable congestion control for the first service flow, and the second congestion information reporting path information is used to indicate reporting congestion information of the target QoS flow via user plane.

Optionally, the first notification manner includes: reporting, by the second network entity, congestion information via user plane after performing congestion detection.

Optionally, the first information includes at least one of the following information: enabling information of a first operation or flow description information of the first service flow, and the first operation includes adding the congestion information of the first service flow to a header of a data packet corresponding to the first service flow.

Optionally, the determining unit 910 is specifically configured to determine the first notification manner based on pre-configuration information, where the pre-configuration information is used to indicate at least one of the following information: whether the second network entity supports reporting of the congestion information via control plane, or whether the second network entity supports reporting of the congestion information via user plane.

Optionally, the determining unit 910 is specifically configured to determine the first notification manner based on second information, and the second information is used for triggering the apparatus to determine the first notification manner.

Optionally, the second information includes at least one of the following information: congestion control indication information, third congestion information reporting path information, or flow description information of the first service flow, where the congestion control indication information is used to instruct to enable congestion control for the first service flow, and the third congestion information reporting path information is used to indicate that a reporting path of the congestion information of the first service flow includes control plane and/or user plane.

Optionally, the apparatus 900 further includes a receiving unit 930, configured to receive the second information transmitted by a fourth network entity.

Optionally, the fourth network entity is an application function AF network element.

Optionally, the second information is preconfigured in the apparatus.

Optionally, the flow description information includes at least one of the following information: data packet filtering information corresponding to the first service flow, an identity of a target UE corresponding to the first service flow, an address of the target UE, an application identifier corresponding to the first service flow, or a quality of service QoS identifier corresponding to the first service flow.

Optionally, the apparatus is a session management function SMF, and the second network entity is an access network device.

Optionally, the access network device is a radio access network RAN or a next-generation radio access network NG-RAN.

Optionally, the first service flow is a service data flow or a quality of service QoS flow.

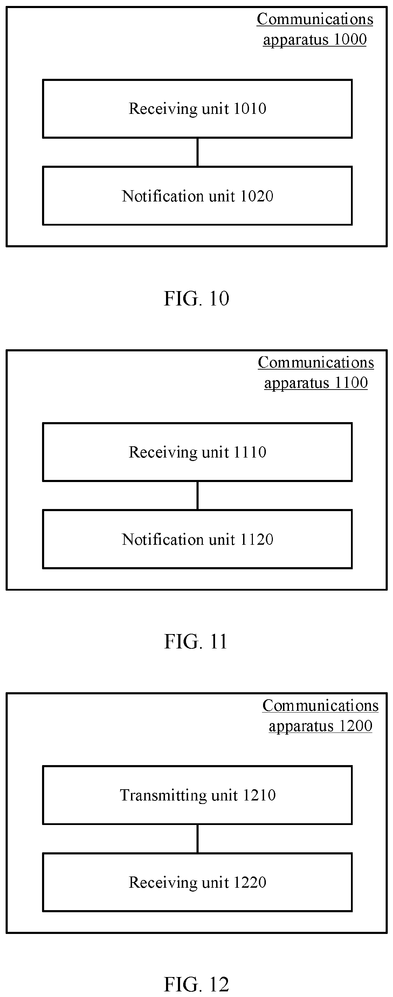

FIG. 10 is a schematic structural diagram of a communications apparatus according to an embodiment of this application. The communications apparatus 1000 in FIG. 10 includes a receiving unit 1010 and a notification unit 1020, which are specifically as follows.

The receiving unit 1010 is configured to receive first information from a first network entity or a fifth network entity, where the first information is used for triggering the apparatus to report congestion information of a first service flow in a first notification manner.

The notification unit 1020 is configured to: in response to the first information, report the congestion information of the first service flow in the first notification manner.

Optionally, the first notification manner includes: reporting, by the apparatus, the congestion information via control plane after performing congestion detection.

Optionally, the notification unit 1020 is specifically configured to: perform congestion detection on the first service flow; and transmit third information to a fourth network entity, where the third information includes the congestion information of the first service flow.

Optionally, the first information includes at least one of the following information: congestion control indication information, first congestion information reporting path information, or flow description information of the first service flow, where the congestion control indication information is used to instruct to enable congestion control for the first service flow, and the first congestion information reporting path information is used to indicate that a reporting path of the congestion information of the first service flow is control plane.

Optionally, the first notification manner includes: transmitting, by the second network entity, the congestion information to a third network entity, and reporting, by the third network entity, the congestion information via user plane after performing a first operation, where the first operation includes adding the congestion information of the first service flow to a header of a data packet corresponding to the first service flow.

Optionally, the notification unit 1020 is specifically configured to: perform congestion detection on the first service flow to obtain the congestion information of the first service flow; add the congestion information of the first service flow to a header of a first data packet in the first service flow; and transmit the first service flow that includes the first data packet.

Optionally, the first information includes at least one of the following information: congestion control indication information, second congestion information reporting path information, or flow description information of the first service flow, where the congestion control indication information is used to instruct to enable congestion control for the first service flow, and the second congestion information reporting path information is used to indicate reporting congestion information of the target QoS flow via user plane.

Optionally, the third network entity is a user plane function UPF.

Optionally, the first notification manner includes: reporting, by the apparatus, the congestion information via user plane after performing congestion detection.

Optionally, the notification unit 1020 is specifically configured to: perform congestion detection on the first service flow to obtain the congestion information of the first service flow; add the congestion information of the first service flow to a header of a second packet in the first service flow; and when network congestion occurs in the first service flow, transmit the first service flow including the second data packet.

Optionally, the first information includes at least one of the following information: enabling information of a first operation or flow description information of the first service flow, and the first operation includes adding the congestion information of the first service flow to a header of a data packet corresponding to the first service flow.

Optionally, the first network entity is a session management function SMF, and the apparatus is an access network device.

Optionally, the access network device is a radio access network RAN or a next-generation radio access network NG-RAN.

Optionally, the apparatus is a target access network device, and the fifth network entity is a source access network device.

Optionally, a handover performed by a terminal device between the source access network device and the target access network device is based on an Xn interface.

Optionally, the apparatus is a target access network device, and the fifth network entity is a target access and mobility management function AMF network element.

Optionally, a handover performed by a terminal device between a source access network device and the target access network device is based on an N2 interface.

Optionally, the source access network device is a radio access network RAN or a next-generation radio access network NG-RAN.

Optionally, the target access network device is a radio access network RAN or a next-generation radio access network NG-RAN.

Optionally, the first service flow is a service data flow or a quality of service QoS flow.

FIG. 11 is a schematic structural diagram of a communications apparatus according to an embodiment of this application. The communications apparatus 1100 in FIG. 11 includes a receiving unit 1110 and a notification unit 1120, which are specifically as follows.

The receiving unit 1110 is configured to receive enabling information of a first operation transmitted by a first network entity, where the first operation includes adding congestion information of a first service flow to a header of a data packet corresponding to the first service flow.

The notification unit 1120 is configured to report congestion information of the first service flow based on the enabling information.

Optionally, the notification unit 1120 is specifically configured to: receive the congestion information, transmitted by a second network entity, of the first service flow; and transmit a third data packet, where a header of the third data packet includes the congestion information of the first service flow.

Optionally, the notification unit 1120 is specifically configured to: read a first data packet, transmitted by the second network entity, in the first service flow, where a header of the first data packet includes the congestion information of the first service flow; and perform the first operation on the third data packet based on the congestion information of the first service flow.

Optionally, the second network entity is an access network device.

Optionally, the access network device is a radio access network RAN or a next-generation radio access network NG-RAN.

Optionally, the first network entity is a session management function SMF, and the apparatus is a user plane function UPF.

Optionally, the first service flow is a service data flow or a quality of service QoS flow.

FIG. 12 is a schematic structural diagram of a communications apparatus according to an embodiment of this application. A communications apparatus 1200 in FIG. 12 includes a transmitting unit 1210, which is specifically as follows.

The transmitting unit 1210 is configured to transmit second information to a first network entity, where the second information is used for triggering the first network entity to decide on a first notification manner of congestion information of a first service flow.

Optionally, the second information includes at least one of the following information: congestion control indication information, third congestion information reporting path information, or flow description information of the first service flow, where the congestion control indication information is used to instruct to enable congestion control for the first service flow, and the third congestion information reporting path information is used to indicate that a reporting path of the congestion information of the first service flow includes control plane and/or user plane.

Optionally, the apparatus 1200 further includes a receiving unit 1220, configured to receive third information transmitted by the second network entity, where the third information includes congestion information of the first service flow.

Optionally, the second network entity is an access network device.

Optionally, the access network device is a radio access network RAN or a next-generation radio access network NG-RAN.

Optionally, the first network entity is a session management function SMF, and the apparatus is an application function AF network element.

Optionally, the first service flow is a service data flow or a quality of service QoS flow.

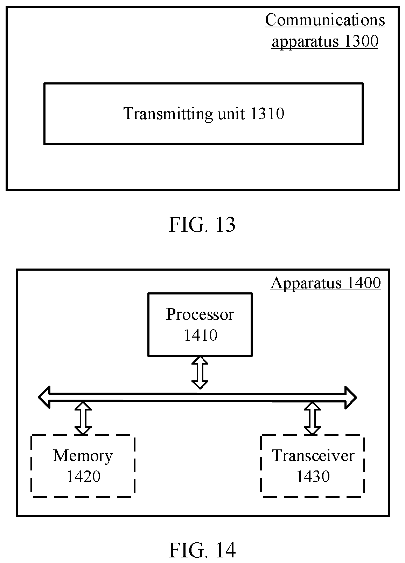

FIG. 13 is a schematic structural diagram of a communications apparatus according to an embodiment of this application. The communications apparatus 1300 in FIG. 13 includes a transmitting unit 1310, which is specifically as follows.

The transmitting unit 1310 is configured to transmit first information to a second network entity, where the first information is used for triggering the second network entity to report congestion information of a first service flow in a first notification manner.

Optionally, the first notification manner includes: reporting, by the second network entity, the congestion information via control plane after performing congestion detection.

Optionally, the first notification manner includes: transmitting, by the second network entity, the congestion information to a third network entity, and reporting, by the third network entity, the congestion information via user plane after performing a first operation, where the first operation includes adding the congestion information of the first service flow to a header of a data packet corresponding to the first service flow.

Optionally, the third network entity is a user plane function UPF.

Optionally, the first notification manner includes: reporting, by the second network entity, congestion information via user plane after performing congestion detection.

Optionally, the second network entity is a target access network device, and the apparatus is a source access network device.

Optionally, a handover performed by a terminal device between the source access network device and the target access network device is based on an Xn interface.

Optionally, the second network entity is a target access network device, and the apparatus is a target access and mobility management function AMF network element.

Optionally, a handover performed by a terminal device between a source access network device and the target access network device is based on an N2 interface.

Optionally, the source access network device is a radio access network RAN or a next-generation radio access network NG-RAN.

Optionally, the target access network device is a radio access network RAN or a next-generation radio access network NG-RAN.

Optionally, the first service flow is a service data flow or a quality of service QoS flow.

FIG. 14 is a schematic structural diagram of an apparatus according to an embodiment of this application. Dashed lines in FIG. 14 indicate that a unit or module is optional. The apparatus 1400 may be configured to implement the methods described in the foregoing method embodiments. The apparatus 1400 may be a chip or a communications apparatus.

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program that may be executed by the processor 1410 to cause the processor 1410 to perform the methods described in the foregoing method embodiments. The memory 1420 may be independent of the processor 1410 or may be integrated into the processor 1410.

The apparatus 1400 may further include a transceiver 1430. The processor 1410 may communicate with another device or chip through the transceiver 1430. For example, the processor 1410 may transmit data to and receive data from another device or chip through the transceiver 1430.

An embodiment of this application further provides a computer-readable storage medium for storing a program. The computer-readable storage medium may be applied to the communications apparatus provided in embodiments of this application, and the program causes a computer to perform the method executed by the communications apparatus in various embodiments of this application.

An embodiment of this application further provides a computer program product. The computer program product includes a program. The computer program product may be applied to the communications apparatus provided in embodiments of this application, and the program causes a computer to perform the method executed by the communications apparatus in various embodiments of this application.

An embodiment of this application further provides a computer program. The computer program may be applied to the communications apparatus provided in embodiments of this application, and the computer program causes a computer to perform the method executed by the communications apparatus in various embodiments of this application.

It should be understood that, in embodiments of this application, "B that is corresponding to A" means that B is associated with A, and B may be determined based on A. However, it should be further understood that, determining B based on A does not mean determining B based only on A, but instead, B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

It should be understood that, in the embodiments of this application, sequence numbers of the foregoing processes do not mean execution sequences. The execution sequences of the processes should be determined according to functions and internal logic of the processes, and should not be construed as any limitation on the implementation processes of the embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
deciding, by a first network entity, on a first notification manner of congestion information of a first service flow; and
transmitting, by the first network entity, first information to a second network entity, wherein the first information is used for triggering the second network entity to report, in the first notification manner, the congestion information of the first service flow.

2. The method according to claim 1, wherein the first notification manner comprises: reporting, by the second network entity, the congestion information via control plane after performing congestion detection.

3. The method according to claim 2, wherein the first information comprises at least one of following information: congestion control indication information, first congestion information reporting path information, or flow description information of the first service flow, wherein the congestion control indication information is used to instruct to enable congestion control for the first service flow, and the first congestion information reporting path information is used to indicate that a reporting path of the congestion information of the first service flow is control plane.

4. The method according to claim 1, wherein the first notification manner comprises: transmitting, by the second network entity, the congestion information to a third network entity, and reporting, by the third network entity, the congestion information via user plane after performing a first operation, wherein the first operation comprises adding the congestion information of the first service flow to a header of a data packet corresponding to the first service flow.

5. The method according to claim 4, wherein the method further comprises:
transmitting, by the first network entity, enabling information of the first operation to the third network entity.

6. The method according to claim 4 or 5, wherein the third network entity is a user plane function UPF.

7. The method according to any one of claims 4 to 6, wherein the first information comprises at least one of following information: congestion control indication information, second congestion information reporting path information, or flow description information of the first service flow, wherein the congestion control indication information is used to instruct to enable congestion control for the first service flow, and the second congestion information reporting path information is used to indicate reporting congestion information of the target QoS flow via user plane.

8. The method according to claim 1, wherein the first notification manner comprises: reporting, by the second network entity, the congestion information via user plane after performing congestion detection.

9. The method according to claim 8, wherein the first information comprises at least one of following information: enabling information of a first operation or flow description information of the first service flow, and the first operation comprises adding the congestion information of the first service flow to a header of a data packet corresponding to the first service flow.

10. The method according to any one of claims 1 to 9, wherein the deciding, by a first network entity, on a first notification manner of congestion information of a first service flow comprises:
determining, by the first network entity, the first notification manner based on pre-configuration information, wherein the pre-configuration information is used to indicate at least one of following information: whether the second network entity supports reporting of the congestion information via control plane, or whether the second network entity supports reporting of the congestion information via user plane.

11. The method according to any one of claims 1 to 10, wherein the deciding, by a first network entity, on a first notification manner of congestion information of a first service flow comprises:
determining, by the first network entity, the first notification manner based on second information, wherein the second information is used for triggering the first network entity to determine the first notification manner.

12. The method according to claim 11, wherein the second information comprises at least one of following information: congestion control indication information, third congestion information reporting path information, or flow description information of the first service flow, wherein the congestion control indication information is used to instruct to enable congestion control for the first service flow, and the third congestion information reporting path information is used to indicate that a reporting path of the congestion information of the first service flow comprises control plane and/or user plane.

13. The method according to claim 11 or 12, wherein the method further comprises:
receiving, by the first network entity, the second information transmitted by a fourth network entity.

14. The method according to claim 13, wherein the fourth network entity is an application function AF network element.

15. The method according to claim 14, wherein the second information is preconfigured in the first network entity.

16. The method according to claim 3, 7, 9, or 12, wherein the flow description information comprises at least one of following information:
data packet filtering information corresponding to the first service flow, an identity of a target UE corresponding to the first service flow, an address of the target UE, an application identifier corresponding to the first service flow, or a quality of service QoS identifier corresponding to the first service flow.

17. The method according to any one of claims 1 to 16, wherein the first network entity is a session management function SMF, and the second network entity is an access network device.

18. The method according to claim 17, wherein the access network device is a radio access network RAN or a next-generation radio access network NG-RAN.

19. The method according to any one of claims 1 to 18, wherein the first service flow is a service data flow or a quality of service QoS flow.

20. A communication method, comprising:
receiving, by a second network entity, first information from a first network entity or a fifth network entity, wherein the first information is used for triggering the second network entity to report congestion information of a first service flow in a first notification manner; and
in response to the first information, reporting, by the second network entity, the congestion information of the first service flow in the first notification manner.

21. The method according to claim 20, wherein the first notification manner comprises: reporting, by the second network entity, the congestion information via control plane after performing congestion detection.

22. The method according to claim 21, wherein the reporting, by the second network entity, the congestion information of the first service flow in the first notification manner comprises:
performing, by the second network entity, congestion detection on the first service flow; and
transmitting, by the second network entity, third information to a fourth network entity, wherein the third information comprises the congestion information of the first service flow.

23. The method according to claim 21 or 22, wherein the first information comprises at least one of following information: congestion control indication information, first congestion information reporting path information, or flow description information of the first service flow, wherein the congestion control indication information is used to instruct to enable congestion control for the first service flow, and the first congestion information reporting path information is used to indicate that a reporting path of the congestion information of the first service flow is control plane.

24. The method according to claim 20, wherein the first notification manner comprises: transmitting, by the second network entity, the congestion information to a third network entity, and reporting, by the third network entity, the congestion information via user plane after performing a first operation, wherein the first operation comprises adding the congestion information of the first service flow to a header of a data packet corresponding to the first service flow.

25. The method according to claim 24, wherein the reporting, by the second network entity, the congestion information of the first service flow in the first notification manner comprises:
performing, by the second network entity, congestion detection on the first service flow to obtain the congestion information of the first service flow;
adding, by the second network entity, the congestion information of the first service flow to a header of a first data packet in the first service flow; and
transmitting, by the second network entity, the first service flow comprising the first data packet.

26. The method according to claim 24 or 25, wherein the first information comprises at least one of following information: congestion control indication information, second congestion information reporting path information, or flow description information of the first service flow, wherein the congestion control indication information is used to instruct to enable congestion control for the first service flow, and the second congestion information reporting path information is used to indicate reporting congestion information of the target QoS flow via user plane.

27. The method according to any one of claims 24 to 26, wherein the third network entity is a user plane function UPF.

28. The method according to claim 20, wherein the first notification manner comprises: reporting, by the second network entity, the congestion information via user plane after performing congestion detection.

29. The method according to claim 28, wherein the reporting, by the second network entity, the congestion information of the first service flow in the first notification manner comprises:
performing, by the second network entity, congestion detection on the first service flow to obtain the congestion information of the first service flow;
adding, by the second network entity, the congestion information of the first service flow to a header of a second packet in the first service flow; and
when network congestion occurs in the first service flow, transmitting, by the second network entity, the first service flow comprising the second data packet.

30. The method according to claim 28 or 29, wherein the first information comprises at least one of following information: enabling information of a first operation or flow description information of the first service flow, and the first operation comprises adding the congestion information of the first service flow to a header of a data packet corresponding to the first service flow.

31. The method according to any one of claims 20 to 30, wherein the first network entity is a session management function SMF, and the second network entity is an access network device.

32. The method according to claim 31, wherein the access network device is a radio access network RAN or a next-generation radio access network NG-RAN.

33. The method according to any one of claims 20 to 32, wherein the second network entity is a target access network device, and the fifth network entity is a source access network device.

34. The method according to claim 33, wherein a handover performed by a terminal device between the source access network device and the target access network device is based on an Xn interface.

35. The method according to any one of claims 20 to 32, wherein the second network entity is a target access network device, and the fifth network entity is a target access and mobility management function AMF network element.

36. The method according to claim 35, wherein a handover performed by a terminal device between a source access network device and the target access network device is based on an N2 interface.

37. The method according to any one of claims 33 to 36, wherein the source access network device is a radio access network RAN or a next-generation radio access network NG-RAN.

38. The method according to any one of claims 33 to 36, wherein the target access network device is a radio access network RAN or a next-generation radio access network NG-RAN.

39. The method according to any one of claims 20 to 38, wherein the first service flow is a service data flow or a quality of service QoS flow.

40. A communication method, comprising:
receiving, by a third network entity, enabling information of a first operation transmitted by a first network entity, wherein the first operation comprises adding congestion information of a first service flow to a header of a data packet corresponding to the first service flow; and
reporting, by the third network entity, the congestion information of the first service flow based on the enabling information.

41. The method according to claim 40, wherein the reporting, by the third network entity, the congestion information of the first service flow based on the enabling information comprises:
receiving, by the third network entity, the congestion information, transmitted by a second network entity, of the first service flow; and
transmitting, by the third network entity, a third data packet, wherein a header of the third data packet comprises the congestion information of the first service flow.

42. The method according to claim 41, wherein the receiving, by the third network entity, the congestion information, transmitted by a second network entity, of the first service flow comprises:
reading, by the third network entity, a first data packet, transmitted by the second network entity, in the first service flow, wherein a header of the first data packet comprises the congestion information of the first service flow; and
performing, by the third network entity, the first operation on the third data packet based on the congestion information of the first service flow.

43. The method according to claim 41 or 42, wherein the second network entity is an access network device.

44. The method according to claim 43, wherein the access network device is a radio access network RAN or a next-generation radio access network NG-RAN.

45. The method according to any one of claims 40 to 44, wherein the first network entity is a session management function SMF, and the third network entity is a user plane function UPF.

46. The method according to any one of claims 40 to 45, wherein the first service flow is a service data flow or a quality of service QoS flow.

47. A communication method, comprising:
transmitting, by a fourth network entity, second information to a first network entity, wherein the second information is used for triggering the first network entity to decide on a first notification manner of congestion information of a first service flow.

48. The method according to claim 47, wherein the second information comprises at least one of following information: congestion control indication information, third congestion information reporting path information, or flow description information of the first service flow, wherein the congestion control indication information is used to instruct to enable congestion control for the first service flow, and the third congestion information reporting path information is used to indicate that a reporting path of the congestion information of the first service flow comprises control plane and/or user plane.

49. The method according to claim 47 or 48, wherein the method further comprises:
receiving, by the fourth network entity, third information transmitted by the second network entity, wherein the third information comprises the congestion information of the first service flow.

50. The method according to claim 49, wherein the second network entity is an access network device.

51. The method according to claim 50, wherein the access network device is a radio access network RAN or a next-generation radio access network NG-RAN.

52. The method according to any one of claims 47 to 51, wherein the first network entity is a session management function SMF, and the fourth network entity is an application function AF network element.

53. The method according to any one of claims 47 to 52, wherein the first service flow is a service data flow or a quality of service QoS flow.

54. A communication method, comprising:
transmitting, by a fifth network entity, first information to a second network entity, wherein the first information is used for triggering the second network entity to report, in a first notification manner, congestion information of a first service flow.

55. The method according to claim 54, wherein the first notification manner comprises: reporting, by the second network entity, the congestion information via control plane after performing congestion detection.

56. The method according to claim 54, wherein the first notification manner comprises: transmitting, by the second network entity, the congestion information to a third network entity, and reporting, by the third network entity, the congestion information via user plane after performing a first operation, wherein the first operation comprises adding the congestion information of the first service flow to a header of a data packet corresponding to the first service flow.

57. The method according to claim 56, wherein the third network entity is a user plane function UPF.

58. The method according to claim 54, wherein the first notification manner comprises: reporting, by the second network entity, the congestion information via user plane after performing congestion detection.

59. The method according to any one of claims 54 to 58, wherein the second network entity is a target access network device, and the fifth network entity is a source access network device.

60. The method according to claim 59, wherein a handover performed by a terminal device between the source access network device and the target access network device is based on an Xn interface.

61. The method according to any one of claims 54 to 60, wherein the second network entity is a target access network device, and the fifth network entity is a target access and mobility management function AMF network element.

62. The method according to claim 61, wherein a handover performed by a terminal device between a source access network device and the target access network device is based on an N2 interface.

63. The method according to any one of claims 59 to 62, wherein the source access network device is a radio access network RAN or a next-generation radio access network NG-RAN.

64. The method according to any one of claims 59 to 62, wherein the target access network device is a radio access network RAN or a next-generation radio access network NG-RAN.

65. The method according to any one of claims 54 to 64, wherein the first service flow is a service data flow or a quality of service QoS flow.

66. A communications apparatus, comprising:
a determining unit, configured to decide on a first notification manner of congestion information of a first service flow; and
a transmitting unit, configured to transmit first information to a second network entity, wherein the first information is used for triggering the second network entity to report the congestion information of the first service flow in the first notification manner.

67. The apparatus according to claim 66, wherein the first notification manner comprises: reporting, by the second network entity, the congestion information via control plane after performing congestion detection.

68. The apparatus according to claim 67, wherein the first information comprises at least one of following information: congestion control indication information, first congestion information reporting path information, or flow description information of the first service flow, wherein the congestion control indication information is used to instruct to enable congestion control for the first service flow, and the first congestion information reporting path information is used to indicate that a reporting path of the congestion information of the first service flow is control plane.

69. The apparatus according to claim 66, wherein the first notification manner comprises: transmitting, by the second network entity, the congestion information to a third network entity, and reporting, by the third network entity, the congestion information via user plane after performing a first operation, wherein the first operation comprises adding the congestion information of the first service flow to a header of a data packet corresponding to the first service flow.

70. The apparatus according to claim 69, wherein the transmitting unit is further configured to transmit enabling information of the first operation to the third network entity.

71. The apparatus according to claim 69 or 70, wherein the third network entity is a user plane function UPF.

72. The apparatus according to any one of claims 69 to 71, wherein the first information comprises at least one of following information: congestion control indication information, second congestion information reporting path information, or flow description information of the first service flow, wherein the congestion control indication information is used to instruct to enable congestion control for the first service flow, and the second congestion information reporting path information is used to indicate reporting the congestion information of the first service flow via user plane.

73. The apparatus according to claim 66, wherein the first notification manner comprises: reporting, by the second network entity, the congestion information via user plane after performing congestion detection.

74. The apparatus according to claim 73, wherein the first information comprises at least one of following information: enabling information of a first operation or flow description information of the first service flow, and the first operation comprises adding the congestion information of the first service flow to a header of a data packet corresponding to the first service flow.

75. The apparatus according to any one of claims 66 to 74, wherein the determining unit is specifically configured to determine the first notification manner based on pre-configuration information, wherein the pre-configuration information is used to indicate at least one of following information: whether the second network entity supports reporting of the congestion information via control plane, or whether the second network entity supports reporting of the congestion information via user plane.

76. The apparatus according to any one of claims 66 to 75, wherein the determining unit is specifically configured to determine the first notification manner based on second information, and the second information is used for triggering the apparatus to determine the first notification manner.

77. The apparatus according to claim 76, wherein the second information comprises at least one of following information: congestion control indication information, third congestion information reporting path information, or flow description information of the first service flow, wherein the congestion control indication information is used to instruct to enable congestion control for the first service flow, and the third congestion information reporting path information is used to indicate that a reporting path of the congestion information of the first service flow comprises control plane and/or user plane.

78. The apparatus according to claim 76 or 77, wherein the apparatus further comprises a receiving unit, configured to receive the second information transmitted by a fourth network entity.

79. The apparatus according to claim 78, wherein the fourth network entity is an application function AF network element.

80. The apparatus according to claim 79, wherein the second information is preconfigured in the apparatus.

81. The apparatus according to claim 68, 72, 74, or 77, wherein the flow description information comprises at least one of following information:
data packet filtering information corresponding to the first service flow, an identity of a target UE corresponding to the first service flow, an address of the target UE, an application identifier corresponding to the first service flow, or a quality of service QoS identifier corresponding to the first service flow.

82. The apparatus according to any one of claims 66 to 81, wherein the apparatus is a session management function SMF, and the second network entity is an access network device.

83. The apparatus according to claim 82, wherein the access network device is a radio access network RAN or a next-generation radio access network NG-RAN.

84. The apparatus according to any one of claims 66 to 83, wherein the first service flow is a service data flow or a quality of service QoS flow.

85. A communications apparatus, comprising:
a receiving unit, configured to receive first information from a first network entity or a fifth network entity, wherein the first information is used for triggering the apparatus to report congestion information of a first service flow in a first notification manner; and
a notification unit, configured to: in response to the first information, report the congestion information of the first service flow in the first notification manner.

86. The apparatus according to claim 85, wherein the first notification manner comprises: reporting, by the apparatus, the congestion information via control plane after performing congestion detection.

87. The apparatus according to claim 86, wherein the notification unit is specifically configured to: perform congestion detection on the first service flow; and transmit third information to a fourth network entity, wherein the third information comprises the congestion information of the first service flow.

88. The apparatus according to claim 86 or 87, wherein the first information comprises at least one of following information: congestion control indication information, first congestion information reporting path information, or flow description information of the first service flow, wherein the congestion control indication information is used to instruct to enable congestion control for the first service flow, and the first congestion information reporting path information is used to indicate that a reporting path of the congestion information of the first service flow is control plane.

89. The apparatus according to claim 85, wherein the first notification manner comprises: transmitting, by the second network entity, the congestion information to a third network entity, and reporting, by the third network entity, the congestion information via user plane after performing a first operation, wherein the first operation comprises adding the congestion information of the first service flow to a header of a data packet corresponding to the first service flow.

90. The apparatus according to claim 89, wherein the notification unit is specifically configured to: perform congestion detection on the first service flow to obtain the congestion information of the first service flow; add the congestion information of the first service flow to a first packet header in the first service flow; and transmit the first service flow comprising the first data packet.

91. The apparatus according to claim 89 or 90, wherein the first information comprises at least one of following information: congestion control indication information, second congestion information reporting path information, or flow description information of the first service flow, wherein the congestion control indication information is used to instruct to enable congestion control for the first service flow, and the second congestion information reporting path information is used to indicate reporting congestion information of the target QoS flow via user plane.

92. The apparatus according to any one of claims 89 to 91, wherein the third network entity is a user plane function UPF.

93. The apparatus according to claim 85, wherein the first notification manner comprises: reporting, by the apparatus, the congestion information via user plane after performing congestion detection.

94. The apparatus according to claim 93, wherein the notification unit is specifically configured to: perform congestion detection on the first service flow to obtain the congestion information of the first service flow; add the congestion information of the first service flow to a header of a second packet in the first service flow; and when network congestion occurs in the first service flow, transmit the first service flow comprising the second data packet.

95. The apparatus according to claim 93 or 94, wherein the first information comprises at least one of following information: enabling information of a first operation or flow description information of the first service flow, and the first operation comprises adding the congestion information of the first service flow to a header of a data packet corresponding to the first service flow.

96. The apparatus according to any one of claims 85 to 95, wherein the first network entity is a session management function SMF, and the apparatus is an access network device.

97. The apparatus according to claim 96, wherein the access network device is a radio access network RAN or a next-generation radio access network NG-RAN.

98. The apparatus according to any one of claims 85 to 97, wherein the apparatus is a target access network device, and the fifth network entity is a source access network device.

99. The apparatus according to claim 98, wherein a handover performed by a terminal device between the source access network device and the target access network device is based on an Xn interface.

100. The apparatus according to any one of claims 85 to 97, wherein the apparatus is a target access network device, and the fifth network entity is a target access and mobility management function AMF network element.

101. The apparatus according to claim 100, wherein a handover performed by a terminal device between a source access network device and the target access network device is based on an N2 interface.

102. The apparatus according to any one of claims 98 to 101, wherein the source access network device is a radio access network RAN or a next-generation radio access network NG-RAN.

103. The apparatus according to any one of claims 98 to 101, wherein the target access network device is a radio access network RAN or a next-generation radio access network NG-RAN.

104. The apparatus according to any one of claims 85 to 103, wherein the first service flow is a service data flow or a quality of service QoS flow.

105. A communications apparatus, comprising:
a receiving unit, configured to receive enabling information of a first operation transmitted by a first network entity, wherein the first operation comprises adding congestion information of a first service flow to a header of a data packet corresponding to the first service flow; and
a notification unit, configured to report the congestion information of the first service flow based on the enabling information.

106. The apparatus according to claim 105, wherein the notification unit is specifically configured to: receive the congestion information, transmitted by a second network entity, of the first service flow; and transmit a third data packet, wherein a header of the third data packet comprises the congestion information of the first service flow.

107. The apparatus according to claim 106, wherein the notification unit is specifically configured to: read a first data packet, transmitted by the second network entity, in the first service flow, wherein a header of the first data packet comprises the congestion information of the first service flow; and perform the first operation on the third data packet based on the congestion information of the first service flow.

108. The apparatus according to claim 106 or 107, wherein the second network entity is an access network device.

109. The apparatus according to claim 108, wherein the access network device is a radio access network RAN or a next-generation radio access network NG-RAN.

110. The apparatus according to any one of claims 105 to 109, wherein the first network entity is a session management function SMF, and the apparatus is a user plane function UPF.

111. The apparatus according to any one of claims 105 to 110, wherein the first service flow is a service data flow or a quality of service QoS flow.

112. A communications apparatus, comprising:
a transmitting unit, configured to transmit second information to a first network entity, wherein the second information is used for triggering the first network entity to decide on a first notification manner of congestion information of a first service flow.

113. The apparatus according to claim 112, wherein the second information comprises at least one of following information: congestion control indication information, third congestion information reporting path information, or flow description information of the first service flow, wherein the congestion control indication information is used to instruct to enable congestion control for the first service flow, and the third congestion information reporting path information is used to indicate that a reporting path of the congestion information of the first service flow comprises control plane and/or user plane.

114. The apparatus according to claim 112 or 113, wherein the apparatus further comprises a receiving unit, configured to receive third information transmitted by the second network entity, wherein the third information comprises the congestion information of the first service flow.

115. The apparatus according to claim 114, wherein the second network entity is an access network device.

116. The apparatus according to claim 115, wherein the access network device is a radio access network RAN or a next-generation radio access network NG-RAN.

117. The apparatus according to any one of claims 112 to 116, wherein the first network entity is a session management function SMF, and the apparatus is an application function AF network element.

118. The apparatus according to any one of claims 112 to 117, wherein the first service flow is a service data flow or a quality of service QoS flow.

119. A communications apparatus, comprising:
a transmitting unit, configured to transmit first information to a second network entity, wherein the first information is used for triggering the second network entity to report congestion information of the first service flow in the first notification manner.

120. The apparatus according to claim 119, wherein the first notification manner comprises: reporting, by the second network entity, the congestion information via control plane after performing congestion detection.

121. The apparatus according to claim 119, wherein the first notification manner comprises: transmitting, by the second network entity, the congestion information to a third network entity, and reporting, by the third network entity, the congestion information via user plane after performing a first operation, wherein the first operation comprises adding the congestion information of the first service flow to a header of a data packet corresponding to the first service flow.

122. The apparatus according to claim 121, wherein the third network entity is a user plane function UPF.

123. The apparatus according to claim 119, wherein the first notification manner comprises: reporting, by the second network entity, the congestion information via user plane after performing congestion detection.

124. The apparatus according to any one of claims 119 to 123, wherein the second network entity is a target access network device, and the apparatus is a source access network device.

125. The apparatus according to claim 124, wherein a handover performed by a terminal device between the source access network device and the target access network device is based on an Xn interface.

126. The apparatus according to any one of claims 119 to 125, wherein the second network entity is a target access network device, and the apparatus is a target access and mobility management function AMF network element.

127. The apparatus according to claim 126, wherein a handover performed by a terminal device between a source access network device and the target access network device is based on an N2 interface.

128. The apparatus according to any one of claims 124 to 127, wherein the source access network device is a radio access network RAN or a next-generation radio access network NG-RAN.

129. The apparatus according to any one of claims 124 to 127, wherein the target access network device is a radio access network RAN or a next-generation radio access network NG-RAN.

130. The apparatus according to any one of claims 119 to 129, wherein the first service flow is a service data flow or a quality of service QoS flow.

131. A communications apparatus, comprising a memory, a transceiver, and a processor, wherein the memory is configured to store a program, the processor performs data transmission and reception by using the transceiver, and the processor is configured to invoke the program in the memory to cause the communications apparatus to execute the method according to any one of claims 1 to 65.

132. A chip, comprising a processor, configured to invoke a program from a memory to cause a device installed with the chip to execute the method according to any one of claims 1 to 65.

133. A computer-readable storage medium, wherein the computer-readable storage medium stores a program, and the program causes a computer to execute the method according to any one of claims 1 to 65.

134. A computer program product, comprising a program, wherein the program causes a computer to execute the method according to any one of claims 1 to 65.

135. A computer program, wherein the computer program causes a computer to execute the method according to any one of claims 1 to 65.
